# EUROPEAN PATENT APPLICATION

(11) **EP 2 704 058 A2**
(43) Date of publication of application: **05.03.2014**
(21) Application number: 13181854.4
(22) Date of filing: 27.08.2013
(51) Int. Cl.: G06K 9/00

(54) **An apparatus and method of automatically detecting multi-dimensional components**

(30) Priority: 31.08.2012 IN CH36162012
(71) Applicant: ROBERT BOSCH GMBH, 70442 Stuttgart (DE)
(72) Inventor: Verma, Prakash, 560100 Bangalore (IN); Padmanabhan, Ananda, 560100 Bangalore (IN); Sunkari, Vamsidhar, 560076 Bangalore (IN); Saurabh, Kumar, 560100 Electronic City, Bangalore (IN)

(57) **Abstract**

The present invention discloses an apparatus (10) and method for detecting multi dimensional components of a device or a system and updating a database (12) of the components. An image of the device or system is captured by an image capturing means (14) and components are identified by comparing parts of the captured image with images of components in an existing database (12). It is possible that different devices or systems models from the same manufacturer will have at least some common components. The present apparatus and method are adapted to identify the same and create a new category and tag the identified components under said new category.

## Description

### Field of the invention:

The invention relates to an electronic database of components of a device or a system to be used in a workshop during diagnosis and servicing of the device or the system.

Particularly it relates to an electronic database of components which can be used in an augmented reality based diagnostic and servicing equipment.

### Background of the invention:

Different devices and systems like vehicles, consumer electric and mechanical home appliances require regular maintenance. For diagnosing faults in the systems and devices and to repair the same a user needs to have a detailed knowledge of the device or the system in consideration. Further he also needs to know the method for testing and repairing the faults. Thus, a skilled person is always required for doing the diagnosis and servicing. To enable a common user to do the diagnosis and servicing manuals are provided with the necessary instructions. These are generally prepared by the experts in the concerned domain.

For example in an automotive workshop the repair instructions or literatures are available either in soft copy or in hard copy which enables the technicians to fix the complaints or perform repairs. With the automotive technology getting sophisticated and with more electronic controls, the repair instructions or literatures have also become complicated and more detailed information is required for performing trouble shooting.

Automotive repair instructions for automotive aftermarket are generally developed by the vehicle experts. These service instructions include lot of information like installations, wiring diagrams, schematic diagrams, plug connection pictures and the like. These service instructions are appended with illustrations 2D/3D drawings, photographs of the engine parts, and like for guiding the technician in performing trouble shooting and repair activities.

Vehicle experts are responsible for preparing this content. Before a new vehicle is launched in market, the content for the same vehicle are prepared by the - vehicle experts. Vehicle experts prepare this service instruction content by tagging all the important vehicle parts in the illustrations photograph or other images. They need to repeat this process for every vehicle model. This tagging of parts is a time consuming monotonous activity.

Thus, there is a need for a device and a method to reduce an expert's time spent on identifying and tagging of parts of a device or a system in a component database.

### Brief description of the invention:

It is an object of the present invention to provide a device and method for automatically detecting multi-dimensional components of different devices and systems and updating of databases of the components of the device or system. Further there is a need for a method which reduces the effort and time required for the experts to create the database and update it manually.

The present invention discloses a method for updating a database of components. An image of the device or system with its components is captured by an image capturing means and the components are identified by comparing parts of the captured image with images of components in an existing database. It is possible that different device models from a same manufacturer will have at least some common components. The present apparatus and method are adapted to identify the same and create a new category and tag the identified components under the new category in a database for later use.

The present invention automatically detects components which are already present in its database as part of components of another device or a system and are tagged with the new device or system for further use during servicing and diagnostic activities. This reduces the effort required to do the same manually by the experts. The database for the components of new devices and systems can be compiled in lesser time and only the unidentified components need to be tagged by the experts manually.

### Brief description of the drawings:

The present invention is described with reference to the following drawings,
Fig. 1 illustrates a block diagram for an apparatus for automatically detecting multi-dimensional components and updating a database of components in accordance with the present invention;
Fig. 2 illustrates a flowchart for the method of updating a database of components in accordance with the present invention; and
Fig.3 illustrates a screen shot of the apparatus for capturing and identifying vehicle components for updating a database in accordance with the present invention.

### Detailed description of the drawings:

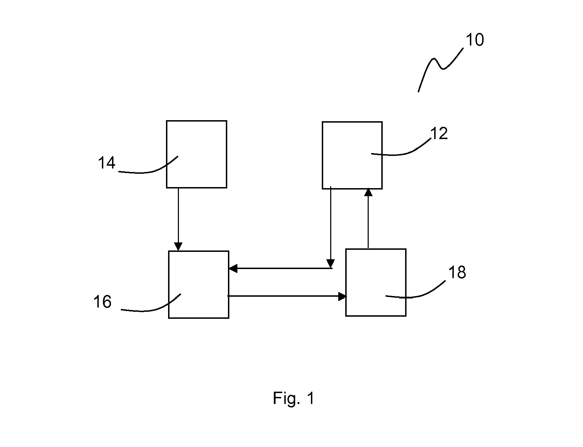

Fig. 1 of the accompanying drawings illustrates a block diagram of an apparatus (10) in accordance with the present invention for updating of a database (12) of components. The apparatus (10) for updating the database (12) includes an image capturing means (14) adapted to capture an image of the system or device in consideration. The image captured by the image capturing means (14) is such that the different components can be observed and identified. The apparatus is provided with a database (12) which includes images for a plurality of components. These components are tagged under one or more categories. A means identifying (16) identifies parts of the captured image as components of the device or system by comparing these parts of the captured images with images of plurality of components in the database (12). A means for tagging (18) tags said identified components to a category in said database.

In a preferred embodiment of the invention the image capturing means (14) is a camera. The user points the camera to the device or system of which the components are to be scanned for updating the database. The components that are identified by comparing with existing components in the database are tagged under a new category corresponding to the make and model of the device or system. The database (12) includes information related to vehicle components like part name, manufacturer and the like. The means for identifying (16) and said means for tagging (18) can be part of a processing unit which controls the processes of the apparatus for updating the database (12) of components.

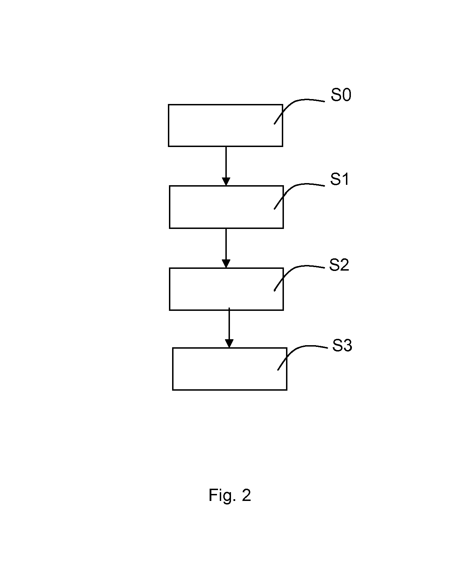

The fig. 2 of the accompanying drawings illustrates a flowchart for a method of updating a database of components in accordance with the present invention. The user aims an image capturing means to the device or system of which the component are to be identified and updated in a database. Images of the device or system are captured by the image capturing means (S0). Parts of the captured images are compared with images of components stored in the database and existing components from the database are identified (S1). A new category corresponding to the make and model is created and the identified vehicle components are tagged under the new category (S2). The unidentified components can be identified and categorized manually (S3).

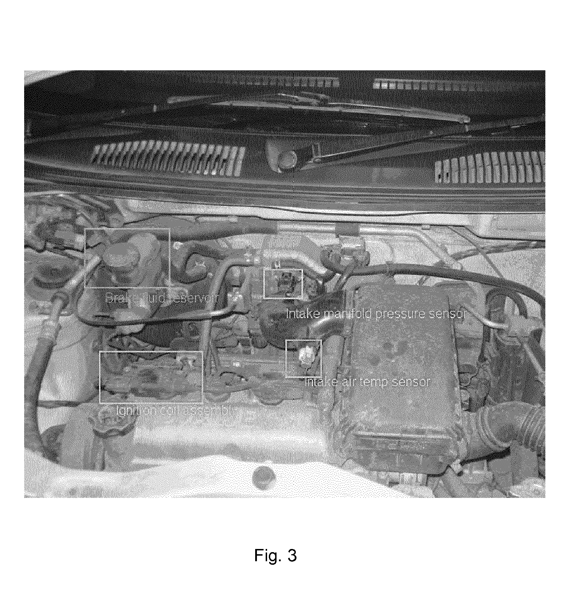

In one embodiment the apparatus in accordance with the present invention is part of a vehicle diagnostic and servicing system. Fig. 3 of the accompanying drawings shows a screen shot of the apparatus for capturing and identifying vehicle components for updating a database in accordance with the present invention. Fig. 3 shows an image captured by the image capturing means with a plurality of vehicle components being identified after comparing the parts of images with the vehicle component images from an existing database. These identified components are further categorized as components for a new vehicle. The unidentified components need to be categorized manually.

When a new vehicle is launched the database of its components is required to be prepared for servicing and diagnostic activities. Typically the database (12) of vehicle components is compiled by experts. This process is very tedious and time consuming as the experts have to create the list of components for the new vehicle manually. There is a possibility that some components of different vehicles from the same manufacturer are similar. When a vehicle expert has tagged a part of an image as a vehicle component, an image of the individual vehicle components is also stored in a database of vehicle components with corresponding part names, vehicle model, and manufacturer details. Further details like service information including the testing sequence and repair instructions can also be included in the database tagged along with the component details. This can enable the reuse of information which is tagged with one component across all the categories in which the component is tagged.

When a new vehicle is launched, the images of the vehicle components stored in the database are searched for similar components using appropriate image processing techniques. There is a possibility that vehicle from same manufacturer use at least some same components. These are identified by the apparatus and method of the invention and automatically a database category for the new vehicle is created with the vehicle components identified by the apparatus categorized under it. A vehicle expert can review the tagging by the apparatus. The unidentified components which are important for the vehicle service need to be identified manually by the expert.

As an illustrative example of the invention, consider a vehicle A for which experts have already created a component database manually. This includes the part names, part numbers, make, service instructions and the like. Some of the components in the database are an intake manifold pressure sensor, brake fluid reservoir, ignition coil and intake air temperature sensor. Another vehicle B is newly launched and a component database for the same needs to be created. When the vehicle B is scanned with the apparatus of the present invention the apparatus searches for the components which it already has in its database. The apparatus may identify a few of the components of the vehicle B, for example the intake manifold pressure sensor and the ignition coil which are same as that for vehicle A as included in its database. Thus, these components are automatically identified and are now also tagged as components of vehicle B. Once tagged, these components will be available in the list of components for vehicle B along with the component information and the service instructions. Thus, repetition of work for identifying the known components and compiling component information for a new vehicle is avoided.

In another embodiment the apparatus of the present invention is used for diagnosis of consumer appliances like washing machines, television sets, personal computers, refrigerators, ovens and the like. The image capturing means captures images of these devices. A database which includes components of these devices can be updated by automatically detecting the components in these devices by comparing to those present in the database. The components can be tagged automatically to different devices along with the component information.

It is further envisioned that the proposed apparatus can also be used for medical diagnostics. Images of human body obtained by x-rays, CT scans, MRI, sonography and the like are scanned by the apparatus of the present invention and parts of the body are matched with an approximate image of the body part when it is normal. Thus, any abnormality in the image can be detected easily.

It must be understood that the embodiments explained in the description above are only illustrative and do not limit the scope of the invention. The scope is only limited by the scope of the claim. Many modifications can be envisaged and are within the scope of this invention.

## Claims

1. An apparatus (10) for automatically detecting multi dimensional components, said components being part of a device or a system, said apparatus (10) comprising,
an image capturing means (14) adapted to capture an image of said device or system of which said component is a part of;
a database (12) including images for a plurality of components, said components being tagged under one or more categories;
a means identifying (16) parts of captured image as a component by comparing said parts of images with images of plurality of components in said database; and
means for tagging (18) said identified components to a new category in said database.

2. An apparatus as claimed in claim (1) wherein said image capturing means (14) is a camera.

3. An apparatus as claimed in claim (1) wherein said apparatus (10) is part of a vehicle diagnostic and servicing system.

4. An apparatus as claimed in claim (1) and (3) wherein said components to be identified by the apparatus are part of a vehicle.

5. An apparatus as claimed in claim (1) and (4) wherein said categories of the components in said database (12) correspond to the make and model of a vehicle.

6. An apparatus as claimed in claim (1) wherein said apparatus (10) is part of a diagnostic and servicing system for consumer appliances.

7. An apparatus as claimed in claim (1) and (6) wherein said components to be identified by the apparatus are part of a consumer appliance.

8. An apparatus as claimed in claim (1) wherein said means for identifying (16) and said means for tagging (18) are part of a processing unit.

9. An apparatus as claimed in claim (1) wherein said database (12) of components is compiled by experts.

10. An apparatus as claimed in claim (1) wherein said database (12) includes component related information like part name, manufacturer and service information for that part.

11. A method for detecting multi dimensional components and updating a database of said components; said method comprising the following steps,
a. capturing an image of a device or system the components of which are to be detected by an image capturing means (S0);
b. comparing parts of said captured image with images of components in said database and identifying the same (S1); and
c. creating a new category and tagging components identified by said image recognition means under said new category (S2).

12. A method as claimed in claim (11) wherein database items for components of vehicles of different makes and/or different models are compiled.

13. A method as claimed in claim (11) wherein unidentified components are identified and tagged manually (S3).

14. A method as claimed in claim (11) wherein the component related information is enabled for use across all categories in which a component is tagged.
